# EUROPEAN PATENT APPLICATION

(11) **EP 4 682 674 A1**
(43) Date of publication of application: **21.01.2026**
(21) Application number: 25151280.2
(22) Date of filing: 10.01.2025
(51) Int. Cl.: G06F 1/16, H04M 1/02

(54) **HINGE MECHANISM AND FOLDABLE ELECTRONIC DEVICE**

(30) Priority: 19.07.2024 CN 202410978767
(71) Applicant: Beijing Xiaomi Mobile Software Co., Ltd., Beijing 100085 (CN)
(72) Inventor: CAO, Xianli, Beijing, 100085 (CN)
(74) Representative: Dehns Germany Partnerschaft mbB

(57) **Abstract**

The present disclosure relates to a hinge mechanism and a foldable electronic device. The hinge mechanism includes a base frame component (100), and a bearing component (200). The bearing component (100) includes a connection member (210) and a floating plate (220) movably connected to the connection member (210). The hinge mechanism includes a first connecting rod component (300) and a second connecting rod component (400). The first connecting rod component (300) is at least capable of limitingly mating with the floating plate (220) when the hinge mechanism is in the unfolded state and/or the folded state, so as to limit a range of motion of the floating plate (220) relative to the connection member (210).

## Description

### TECHNICAL FIELD

The present disclosure relates to the electronic technical field, and in particular to a hinge mechanism and a foldable electronic device.

### BACKGROUND

Electronic devices such as mobile phones and tablets have become indispensable technology products in people's lives, learning and entertainment. At present, the flexible display screen of a foldable electronic device can be easily carried after being folded. When the flexible display screen is unfolded, a larger display area is available, making foldable electronic devices become increasingly favored by consumers.

In the related art, a foldable electronic device usually uses a hinge mechanism to realize unfolding or folding of a flexible display screen. However, defects of a floating plate limiting structure of a traditional hinge mechanism make the structure of the hinge mechanism bloated, which is not conducive to lightness and thinness of the foldable electronic device.

### SUMMARY

The present disclosure provides a hinge mechanism and a foldable electronic device. The hinge mechanism has a compact structure and can meet requirements of lightness and thinness of the foldable electronic device.

The technical solutions are as follows:
According to a first aspect of an embodiment of the present disclosure, there is provided a hinge mechanism, including: a base frame component, a bearing component, a first connecting rod component and a second connecting rod component. The bearing component includes a connection member and a floating plate movably connected to the connection member. The first connecting rod component is rotatably connected to the base frame component, and the first connecting rod component is rotatably connected to the connection member. The second connecting rod component is rotatably connected to the base frame component and is slidably connected to the connection member. The first connecting rod component and the second connecting rod component cooperate with each other to drive the connection member to flip relative to the base frame component, so that the hinge mechanism has a folded state and an unfolded state. The first connecting rod component is at least capable of limitingly mating with the floating plate when the hinge mechanism is in the unfolded state and/or the folded state, so as to limit a range of motion of the floating plate relative to the connection member.

The technical solution provided by the embodiment of the present disclosure may have the following beneficial effects:
When the hinge mechanism is used, the first connecting rod component and the second connecting rod component rotate along the base frame component, and the first connecting rod component drives the connection member to rotate, so that the connection member and the second connecting rod component slide and the connection member drives the floating plate to flip relative to the base frame component, thus the hinge mechanism having the folded state and the unfolded state. The first connecting rod component can at least limitingly cooperate with the floating plate when the hinge mechanism is in the unfolded state and/or the folded state to limit the range of motion of the floating plate relative to the connection member. Thus, the floating plate is limited by the first connecting rod component, making the structure of the hinge mechanism more compact.

The technical solutions of the present disclosure will be further described below:
In an embodiment, when the hinge mechanism is in the unfolded state, at least a part of the floating plate and the base frame component form a support structure, and when the hinge mechanism is in the folded state, the floating plate and the base frame component are arranged at an angle to form an avoidance space; and/or
the first connecting rod component includes a first connecting rod rotatably connected to the connection member, and a part of the first connecting rod is movably connected to the floating plate to limit the range of motion of the floating plate relative to the connection member.

In an embodiment, when the hinge mechanism is in the unfolded state, limiting mating is enabled between a part of the first connecting rod and the floating plate to limit the floating plate from tilting in a direction away from the base frame component.

In an embodiment, one of the first connecting rod and the floating plate is provided with a limiting portion, the other one of the first connecting rod and the floating plate is provided with a mating portion, and limiting mating is enabled between the mating portion and the limiting portion to limit the range of motion of the floating plate relative to the connection member.

In an embodiment, one of the limiting portion and the mating portion is a limiting concave portion, and the other one of the limiting portion and the mating portion is a limiting convex portion to realize limiting mating with the limiting concave portion; and/or
one of the limiting portion and the mating portion is a guide rail, and the other one of the limiting portion and the mating portion is a guide portion that cooperates with the guide rail; and/or
the mating portion slidably cooperates with the limiting portion to limit a range of rotation of the floating plate relative to the connection member; and/or
the floating plate includes a first support surface for forming the support structure, the mating portion is arranged below the first support surface, and the mating portion overlaps the limiting portion to realize limiting mating with the limiting portion.

In an embodiment, a first lead-in portion is provided on at least one of a side wall of the mating portion and the limiting portion, and a part of the limiting portion is introduced into the mating portion through the first lead-in portion.

In an embodiment, the limiting concave portion is provided at the floating plate, and the limiting convex portion is provided at the first connecting rod; and/or
the floating plate includes a hook body provided below the first support surface, and a part of the hook body is spaced apart from the first support surface to form the limiting concave portion.

In an embodiment, the connection member includes a first connection portion. The floating plate includes a second connection portion rotatably connected to the first connection portion, and the second connection portion and the mating portion are spaced apart along a width direction of the floating plate. Limiting mating is realized between the mating portion and the limiting portion to limit a range of rotation of the first connection portion relative to the second connection portion.

In an embodiment, the connection member is provided with an avoidance slope, the floating plate includes a first side and a second side spaced apart along the width direction of the floating plate, and the second connection portion is provided close to the second side. When the hinge mechanism is in the unfolded state, the first side of the floating plate is spaced apart from the avoidance slope to make the floating plate and the base frame component form the support structure. When the hinge mechanism is in the folded state, the floating plate is arranged against the avoidance slope.

In an embodiment, when the hinge mechanism is in the unfolded state, the limiting portion bears against a side wall of the mating portion to limit the floating plate from tilting in a direction away from the base frame component.

In an embodiment, the limiting portion includes a protrusion, and the mating portion includes a limiting groove, and when the hinge mechanism is in the unfolded state, limiting mating is enabled between the protrusion and the limiting groove to limit the floating plate from tilting in a direction away from the base frame component.

In an embodiment, the protrusion is fixed to the first connecting rod, and the floating plate is provided with the limiting groove.

In an embodiment, the first connecting rod is provided with a mating notch, at least a part of the protrusion protrudes in the mating notch, and a part of the floating plate is inserted into the mating notch to realize limiting mating between the limiting groove and the protrusion.

In an embodiment, there are two protrusions arranged at opposite sides of the mating notch and spaced apart from each other; and/or
the floating plate includes a first support surface for forming the support structure and the mating portion arranged below the first support surface, and a part of the mating portion is inserted into the mating notch to make the protrusions limitingly mate with the limiting groove.

In an embodiment, a length direction of the limiting groove extends along a width direction of the floating plate, and the protrusion slides in the limiting groove during switching between the unfolded state and the folded state of the hinge mechanism.

When the hinge mechanism is in the unfolded state, the protrusion bears against a side wall of the limiting groove to limit the floating plate from tilting in a direction away from the base frame component.

In an embodiment, the second connecting rod component includes a movable member, the movable member is rotatably connected to the base frame component, and the movable member is slidably connected to the connection member. The mating portion is arranged on the floating plate, the first connecting rod component includes a second connecting rod and a transmission member. One end of the first connecting rod is rotatably connected to the connection member, and the other end of the first connecting rod is rotatably connected to one end of the second connecting rod and one end of the transmission member. The other end of the second connecting rod is rotatably connected to the base frame component, and the other end of the transmission member is rotatably connected to the movable member. The one end of the second connecting rod is provided with an avoidance notch for avoiding the mating portion, and the avoidance notch communicates with the mating notch to form an accommodating space for accommodating the mating portion.

In an embodiment, the second connecting rod component includes a movable member, the movable member is rotatably connected to the base frame component, and the movable member is slidably connected to the connection member. The first connecting rod component includes a second connecting rod and a transmission member. One end of the first connecting rod is rotatably connected to the connection member, and the other end of the first connecting rod is rotatably connected to one end of the second connecting rod and one end of the transmission member. The other end of the second connecting rod is rotatably connected to the base frame component, and the other end of the transmission member is rotatably connected to the movable member.

One of the transmission member and the second connecting rod is provided with a pressing protrusion, and when the hinge mechanism is in the folded state, the connection member and the base frame component are arranged at an angle, and the pressing protrusion bears against the other one of the transmission member and the second connecting rod, so that the transmission member presses against the second connecting rod.

In an embodiment, when the hinge mechanism is in the folded state, the pressing protrusion bears against the other one of the transmission member and the second connecting rod, so that a part of the second connecting rod is pushed up toward a center line direction of the base frame component.

In an embodiment, the other end of the first connecting rod is rotatably connected to the connection member and has a first rotation center, the other end of the transmission member is rotatably connected to the other end of the second connecting rod and has a second rotation center, and the one end of the transmission member is rotatably connected to the movable member and has a third rotation center.

When the hinge mechanism is in the folded state, the first rotation center and the third rotation center form a first connection line, and the second rotation center is provided at an inner side of the first connection line, so that the pressing protrusion pushes up the second connecting rod.

In an embodiment, the transmission member is provided with a first notch, a part of the second connecting rod is provided in the first notch and is rotatably connected to a part of the transmission member, and the pressing protrusion is fixed to the transmission member and is provided at an edge close to the first notch.

In an embodiment, the second connecting rod component includes a movable member, the movable member is rotatably connected to the base frame component, and the movable member is slidably connected to the connection member, and a part of the first connecting rod is rotatably connected to the base frame component.

In an embodiment, the first connecting rod component further includes at least one connecting rod;
the first connecting rod is rotatably connected to the connection member through at least one of the connecting rod; and/or
the first connecting rod is rotatably connected to the base frame component through at least one of the connecting rod.

In an embodiment, the first connecting rod component further includes a transmission unit, and the first connecting rod is movably connected to the floating plate through the transmission unit to limit the range of motion of the floating plate relative to the connection member.

In an embodiment, there are at least two first connecting rods, at least two of the first connecting rods cooperate to form the first connecting rod component, and at least two of the first connecting rods are movably connected to the floating plate to limit the range of motion of the floating plate relative to the connection member.

In an embodiment, the floating plate is rotatably connected or slidably connected to the connection member.

According to a second aspect of an embodiment of the present disclosure, there is provided a foldable electronic device, including a flexible display screen, a housing component and the hinge mechanism according to any one of the embodiments described above. The housing component includes a housing body fixedly connected to the connection member. At least a part of the flexible display screen covers the housing body and the hinge mechanism.

The technical solutions provided by the embodiments of the present disclosure can have the following beneficial effects:
The hinge mechanism of any of the above-mentioned embodiments is applied in the foldable electronic device, and at least a part of the flexible display screen covers the hinge mechanism and the housing body. The hinge mechanism can be connected to the housing body through the connection member, so as to drive the housing body to rotate relative to the base frame component through the first connecting rod component and the second connecting rod component, thereby realizing the unfolding and folding of the flexible display screen. The first connecting rod component can at least limitingly cooperate with the floating plate in the unfolded state and/or folded state to limit the range of motion of the floating plate relative to the connection member. Thus, the first connecting rod component is used to limit the floating plate, making the structure of the hinge mechanism more compact, which is conducive to realizing the lightness and thinness of the foldable electronic device.

It is to be understood that the foregoing general description and the following detailed description are illustrative and explanatory only and are not restrictive of the present disclosure.

### BRIEF DESCRIPTION OF THE DRAWINGS

The drawings constituting a part of the present disclosure are used to provide a further understanding of the present disclosure. The example embodiments of the present disclosure and the description thereof are used to explain the present disclosure and do not constitute an undue limitation on the present disclosure.

In order to more clearly illustrate the technical solutions in the embodiments of the present disclosure, the drawings used in the description of the embodiments will be briefly introduced below. Obviously, the drawings described below are only some embodiments of the present disclosure. For those of ordinary skill in this art, other drawings can be obtained based on these drawings without paying any creative work.
FIG. 1 is a schematic structural diagram of a foldable electronic device according to an embodiment.
FIG. 2 is a schematic structural diagram of a hinge mechanism of the foldable electronic device shown in FIG. 1 (the hinge mechanism is in an unfolded state).
FIG. 3 is a schematic exploded view of the structure of the hinge mechanism shown in FIG. 2.
FIG. 4 is a schematic diagram showing the principle of the hinge mechanism shown in FIG. 3.
FIG. 5 is a schematic structural diagram of a floating plate shown in FIG. 3.
FIG. 6 is a schematic structural diagram of a first connecting rod shown in FIG. 3.
FIG. 7 is a schematic structural diagram of the hinge mechanism shown in FIG. 2 in a folded state.
FIG. 8 is a schematic half-section diagram taken along A-A shown in FIG. 2.
FIG. 9 is a schematic half-section diagram taken along B-B shown in FIG. 7.
FIG. 10 is a schematic diagram of a partial structure of the hinge mechanism shown in FIG. 7 when the hinge mechanism is in an unfolded state.
FIG. 11 is a partial cross-sectional schematic diagram of a hinge mechanism in a folded state shown in one embodiment.
FIG. 12 is a schematic structural diagram of a transmission member shown in FIG. 11.
FIG. 13 is a schematic structural diagram of a second connecting rod shown in FIG. 11.
FIG. 14 is a schematic diagram of a partial structure of the hinge mechanism shown in FIG. 11 when the hinge mechanism is in a folded state (a part of the structure of the base frame component is hidden).
FIG. 15 is a schematic diagram showing the principle of a hinge mechanism according to an embodiment.
FIG. 16 is a schematic diagram of the hardware structure of a foldable electronic device according to an embodiment.

### Description of reference numerals:

10: foldable electronic device; 11: processing component; 12: memory; 13: power component; 14: multimedia component; 15: audio component; 16: input/output interface; 17: sensor component; 18: communication component; 10a: flexible display screen; 10b: hinge mechanism; 101: accommodating space; 103: support structure; 104: first rotation center; 105: second rotation center; 106: third rotation center; 107: first connection line; 10c: housing component; 102: housing body; 100: base frame component; 110: arc-shaped guide groove; 200: bearing component; 210: connection member; 211: first connection portion; 212: avoidance slope; 220: floating plate; 221: mating portion; 2211: limiting groove; 222: first support surface; 223: hook body; 224: second connection portion; 201: first side; 202: second side; 300: first connecting rod component; 310: first connecting rod; 311: limiting portion; 3111: protrusion; 312: mating notch; 313: second rotation portion; 3131: second through hole; 320: second connecting rod; 321: avoidance notch; 322: third rotation portion; 3221: third through hole; 323: fourth rotation portion; 3231: arc-shaped guide body; 324: plate body; 330: transmission member; 331: pressing protrusion; 332: first notch; 333: first rotation portion; 3331: first through hole; 334: first guide surface; 400: second connecting rod component; 410: movable member; 411: first connecting body; 412: second connecting body; 413: transition body; 500: first rotation shaft; 600: damping component; 700: synchronization component.

### DETAILED DESCRIPTION

In order to make the purposes, technical solutions and advantages of the present disclosure more clear, the present disclosure is further described in detail below in conjunction with the accompanying drawings and specific implementations. It should be understood that the specific implementations described here are only used to explain the present disclosure and do not limit the protection scope of the present disclosure.

Unless otherwise defined, all technical and scientific terms used herein have the same meaning as those commonly understood by those skilled in the art to which the present disclosure belongs. The terms used herein in the specification of the present disclosure are only for the purpose of describing specific embodiments and are not intended to limit the present disclosure.

Electronic devices such as mobile phones and tablet computers have become indispensable technology products in people's lives, learning and entertainment, bringing a lot of convenience and fun to people's lives. With the development of the diversification of electronic device functions, there are many types and brands of electronic devices, which makes it possible for consumers to choose from a lot of electronic devices. Simply improving the functional characteristics of electronic devices cannot meet people's requirements for electronic devices.

As the application of flexible display screens becomes more and more mature, application of flexible display screens in electronic devices is increasingly extensive. For a foldable electronic device using a flexible display screen, the flexible display screen can be folded for easy carrying. When the flexible display screen is unfolded, a larger display area is available, making foldable electronic devices become increasingly favored by consumers. Among foldable electronic devices with similar display size and performance, a lighter foldable electronic device enables better grip feeling, and is more attractive to consumers.

In the related art, a foldable electronic device usually uses a hinge mechanism to realize unfolding or folding of a flexible display screen. The defects of a floating plate limiting structure of the traditional hinge mechanism make the structure of the hinge mechanism bloated, which is not conducive to the lightness and thinness of the foldable electronic device. For example, the floating plate is movably connected to a connection member, and other limiting structure(s) is(are) also set on the connection member to limit a range of motion of the floating plate, and the connection member also needs to be connected to a housing body, this causes the thickness of the connection member at this position to be thicker, which is not conducive to the lightness and thinness of the foldable electronic device.

Based on this, the present disclosure provides a hinge mechanism having a compact structure and being capable of meeting the requirements of lightness and thinness of foldable electronic devices.

In order to better understand the hinge mechanism of the present disclosure, a foldable electronic device using the hinge mechanism is described below.

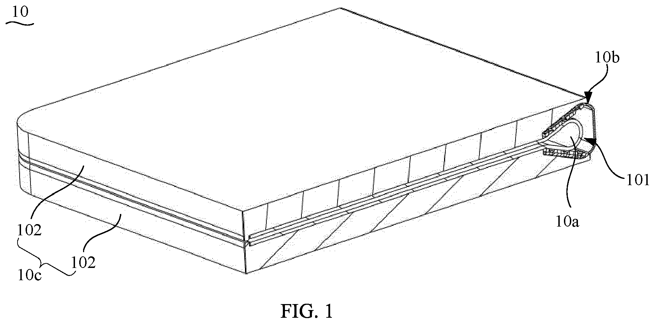

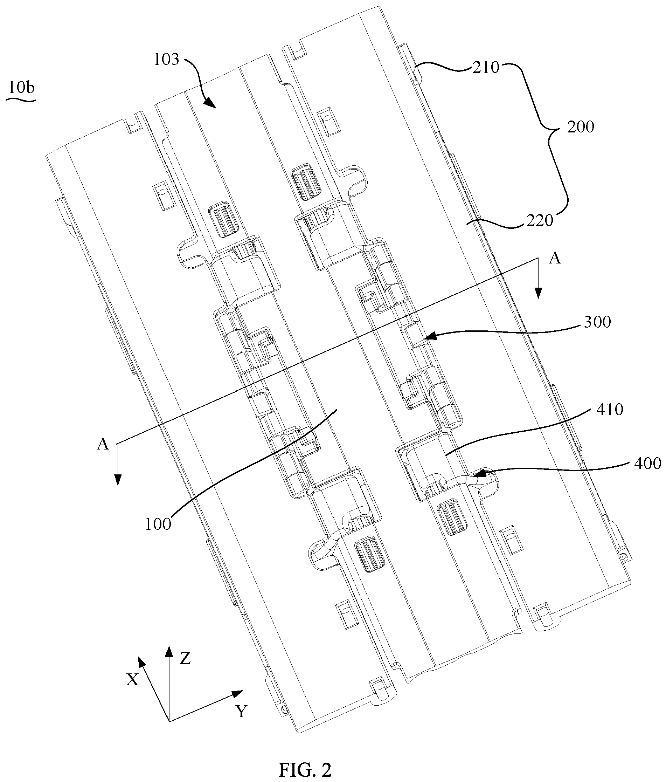

As shown in FIG. 1 and FIG. 2, in an embodiment of the present disclosure, a foldable electronic device 10 is provided. The foldable electronic device 10 includes a flexible display screen 10a, a housing component 10c and a hinge mechanism 10b. The housing component 10c includes a housing body 102. At least a part of the flexible display screen 10a covers the hinge mechanism 10b and the housing body 102. The housing body 102 is fixedly connected to a part of the hinge mechanism 10b to drive the housing body 102 to rotate. In this way, the flexible display screen 10a is folded or unfolded by motion of the housing body 102 along with the hinge mechanism 10b.

As shown in FIG. 2, the hinge mechanism 10b includes a base frame component 100, a bearing component 200, a first connecting rod component 300, and a second connecting rod component 400. The bearing component 200 includes a connection member 210 and a floating plate 220 movably connected to the connection member 210. The first connecting rod component 300 is rotatably connected to the base frame component 100, and the first connecting rod component 300 is rotatably connected to the connection member 210. The second connecting rod component 400 is rotatably connected to the base frame component 100 and is slidably connected to the connection member 210. The first connecting rod component 300 and the second connecting rod component 400 cooperate with each other to drive the connection member 210 to flip relative to the base frame component 100, so that the hinge mechanism 10b has a folded state and an unfolded state. The first connecting rod component 300 can at least limitingly cooperate with the floating plate 220 when the hinge mechanism 10b is in the unfolded state and/or the folded state to limit a range of motion of the floating plate 220 relative to the connection member 210.

When the hinge mechanism 10b is used, the first connecting rod component 300 and the second connecting rod component 400 rotate along the base frame component 100, and the first connecting rod component 300 drives the connection member 210 to rotate to make the connection member 210 and the second connecting rod component 400 slide, and thus the connection member 210 drives the floating plate 220 to flip relative to the base frame component 100. In this way, the hinge mechanism 10b has a folded state and an unfolded state. The first connecting rod component 300 can at least limitingly cooperate with the floating plate 220 when the hinge mechanism 10b is in the unfolded state and/or the folded state to limit the range of motion of the floating plate 220 relative to the connection member 210. The first connecting rod component 300 is used to limit the floating plate 220, and thus the structure of the hinge mechanism 10b is more compact. In this way, influence of the hinge mechanism 10b on the lightness and thinness of the foldable electronic device 10 is reduced, which is conducive to realizing the lightness and thinness of the foldable electronic device 10.

It is understandable that foldable electronic device can usually be locked in the unfolded state by the hinge mechanism to facilitate users to unfold and use the foldable electronic device. At this time, the rotational damping between the first connecting rod component 300 and the base frame component 100 is relatively large, and it is not easy for the first connecting rod component 300 to rotate. The first connecting rod component 300 is a reliable limiter for the floating plate 220, and the first connecting rod component 300 can limit movement of the floating plate 220. In some embodiments, the first connecting rod component 300 can limitingly cooperate with the floating plate 220 in the unfolded state, and can limit the floating plate 220 from tilting in a direction away from the base frame component 100. In this way, the embodiment can prevent the hinge mechanism 10b from over-unfolding to cause damage to elements or separation and thus failure of related elements, or even damage to the flexible display screen 10a. Furthermore, the hinge mechanism 10b can not only prevent the floating plate 220 from tilting, but also the floating plate 220 can be used to reliably support the flexible display screen 10a.

In addition, the foldable electronic device 10 usually uses a flexible transmission member to achieve communication connection between electronic devices on both sides of the base frame component 100 through the base frame component 100. The hinge mechanism 10b of the present disclosure can prevent the floating plate 220 from tilting and being pushed up by the flexible transmission member, and the floating plate 220 can be used to limit a bending direction of the flexible transmission line (such as a flexible circuit board) to reduce interference.

It can be understood that the foldable electronic device can usually be locked in the folded state by the hinge mechanism to facilitate carrying by a user. In this situation, the rotational damping between the first connecting rod component 300 and the base frame component 100 is relatively large, and the first connecting rod component 300 will not rotate easily. The first connecting rod component 300 is a reliable limiter for the floating plate 220, and the first connecting rod component can limit movement of the floating plate 220. In some embodiments, the first connecting rod component 300 can limitingly cooperate with the floating plate 220 in the folded state, and can limit the floating plate 220 from moving in a direction away from the connection member 210. In this way, when the foldable electronic device 10 accidentally falls in the folded state, since a part of the flexible display screen 10a is bent in the accommodating space 101, and the floating plate 220 is limited by the first connecting rod component 300, with the cooperation with the base frame component 100 and a part of the connecting rod component, the deformation of the flexible display screen 10a can be limited and buffered to avoid excessive deformation which may cause damage to the flexible display screen 10a, thus helping improve the reliability of the foldable electronic device 10.

In some embodiments, the foldable electronic device can perform a suspend motion through the hinge mechanism to achieve sudden rotation and sudden stop. In this situation, the rotational damping between the first connecting rod component 300 and the base frame component 100 is relatively large, and the first connecting rod component 300 will not rotate easily. The first connecting rod component 300 is a reliable limiter for the floating plate 220 and the first connecting rod component can limit movement of the floating plate 220. In some embodiments, the first connecting rod component can limitingly cooperate with the floating plate during the rotation of the hinge mechanism to limit the range of motion of the floating plate relative to the connection member. In this situation, the first connecting rod component cooperates with the connection member so that the floating plate can achieve a suspend motion and achieve sudden rotation and sudden stop.

The rotational resistance to which the hinge mechanism is subjected when the foldable electronic device is in a locked state is greater than the rotational resistance to which the hinge mechanism is subjected when the foldable electronic device is in a suspend state.

To better understand the technical solutions of the present disclosure, as shown in FIG. 2, FIG. 5 and FIG. 8, a length direction of the floating plate 220 and a length direction of the base frame component 100 are set as the X-axis direction, a width direction of the floating plate 220 and a width direction of the base frame component 100 are set as the Y-axis direction, and a thickness direction of the floating plate 220 and a thickness direction of the base frame component 100 are also set as the Z-axis direction.

It can be understood that when the foldable electronic device 10 is in the unfolded state, its thickness direction is also in the Z-axis direction. When the foldable electronic device 10 is in the unfolded state, preventing the floating plate 220 from tilting up can also be understood as preventing a part of the floating plate 220 from tilting up toward the Z-axis direction to push up the flexible display screen 10a.

As shown in FIG. 2 and FIG. 7 to FIG. 9, in some embodiments, when the hinge mechanism 10b is in the unfolded state, at least a part of the floating plate 220 and the base frame component 100 form a support structure 103. When the hinge mechanism 10b is in the folded state, the floating plate 220 and the base frame component 100 are arranged at an angle to form an avoidance space. In this way, when the foldable electronic device 10 is used, if the flexible display screen 10a needs to be unfolded for use, by switching the hinge mechanism 10b to the unfolded state, at least a part of the floating plate 220 and the base frame component 100 form the support structure 103. Thus, the support structure 103 and the housing body 102 can be used to more comprehensively support the flexible display screen 10a, improve the display quality, and facilitate the user to perform operations on the flexible display screen 10a. When the flexible display screen 10a is folded, the hinge mechanism 10b switches from the unfolded state to the folded state. During this procedure, the first connecting rod component 300 and the second connecting rod component 400 rotate along the base frame component 100, and the first connecting rod component 300 drives the connection member 210 to rotate to make the connection member 210 and the second connecting rod component 400 slide, and thus the connection member 210 drives the floating plate 220 to move away from the base frame component 100, to give room for the flexible display screen 10a to bend.

It should be noted that the "limiting mating/limiting cooperation" between the floating plate 220 and the first connecting rod component 300 includes clamp limiting, abutting limiting or insertion limiting, etc.

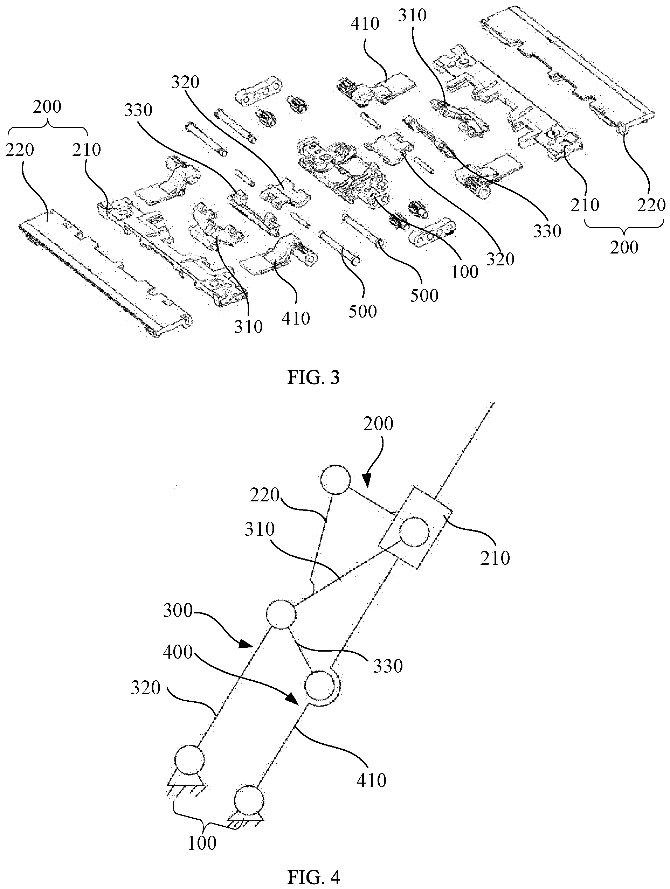

As shown in FIG. 3 to FIG. 10, in some embodiments, the first connecting rod component 300 includes a first connecting rod 310 rotatably connected to the connection member 210, and a part of the first connecting rod 310 is movably connected to the floating plate 220 to limit the range of motion of the floating plate 220 relative to the connection member 210. In this way, since the floating plate 220 can be rotatably provided on the connection member 210, in this situation, the floating plate 220 is limited by the first connecting rod 310 rotatably connected to the connection member 210, so that the structure of the hinge mechanism 10b is compact, and the range of motion of the floating plate 220 relative to the connection member 210 can be limited by the first connecting rod component 300.

Optionally, a part of the first connecting rod 310 is movably connected to the floating plate 220 to limit the rotation range of the floating plate 220 relative to the connection member 210.

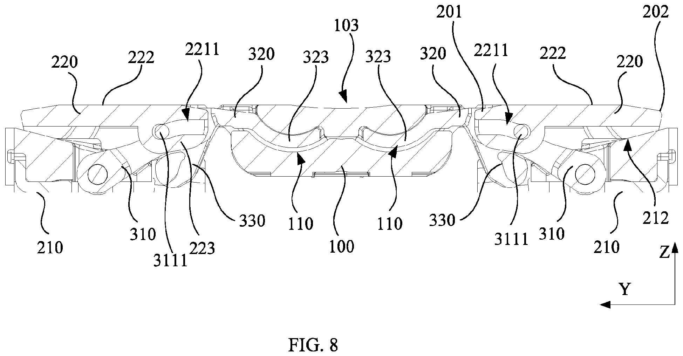

As shown in FIG. 8, in some embodiments, when the hinge mechanism 10b is in the unfolded state, limiting mating between a part of the first connecting rod 310 and the floating plate 220 limits the floating plate 220 from tilting in a direction away from the base frame component 100. In this way, combined with the above analysis, it can be seen that the hinge mechanism 10b can be prevented from being over-extended to cause damage to elements or separation and thus failure of related elements, or even damage to the flexible display screen 10a. Thus, the hinge mechanism 10b can prevent the floating plate 220 from tilting, and the floating plate 220 can be used to reliably support the flexible display screen 10a.

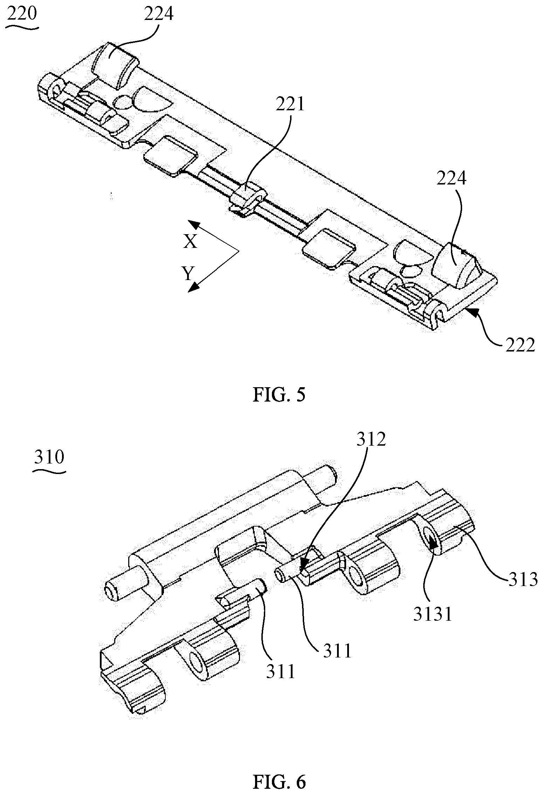

In combination with any of the above-mentioned embodiments of the first connecting rod 310, as shown in FIG. 5 to FIG. 7, in some embodiments, one of the first connecting rod 310 and the floating plate 220 is provided with a limiting portion 311, and the other one of the first connecting rod 310 and the floating plate 220 is provided with a mating portion 221. Limiting mating is enabled between the mating portion 221 and the limiting portion 311 to limit the range of motion of the floating plate 220 relative to the connection member 210. In this way, the floating plate 220 is rotatably connected to the connection member 210, and limiting mating is realized between the mating portion 221 and the limiting portion 311 to limit the range of motion of the floating plate 220 relative to the connection member 210, so that the connection structure between the floating plate 220 and the connection member 210 is simple, which is conducive to reducing the thickness of the floating plate 220 and/or the connection member 210, and thus the bearing component 200 can be designed to be lighter and thinner.

It should be noted that there may be various specific structures for the limiting mating between the limiting portion and the mating portion, and the structures can at least enable limiting mating with the floating plate when the hinge mechanism is in the unfolded state and/or folded state to limit the range of motion of the floating plate relative to the connection member. For example, when the hinge mechanism is in the unfolded state, the limiting portion bears against the mating portion to enable the limiting mating to limit the floating plate from tilting in the direction away from the connection member. Alternatively, when the hinge mechanism is in the folded state, the limiting portion bears against the mating portion to enable the limiting mating to limit the floating plate from moving in the direction away from the connection member to cause a smaller accommodation space. Alternatively, the limiting portion limitingly cooperates with the mating portion, and the limiting portion cooperates with the connection member, so that the floating plate moves along a set trajectory (for example, swings or telescopically moves, etc.).

In some embodiments, one of the limiting portion and the mating portion is a limiting concave portion, and the other one of the limiting portion and the mating portion is a limiting convex portion that limitingly mates with the limiting concave portion.

In some embodiments, one of the limiting portion and the mating portion is a guide rail, and the other one of the limiting portion and the mating portion is a guide portion that cooperates with the guide rail. In this way, the floating plate can move along a set trajectory through the cooperation of the guide rail and the guide portion.

For example, when the floating plate is rotatably connected to the connection member, the guide rail is an arc-shaped guide rail and cooperates with the guide portion to drive the floating plate to rotate.

The specific implementation of the guide rail includes but is not limited to at least one of a guide groove and a rail body.

Optionally, in some embodiments, the mating portion slidably cooperates with limiting portion to limit the range of rotation of the floating plate relative to the connection member. In this way, the floating plate is rotatably connected with the connection member, and the mating portion slidably cooperates with the limiting portion, so that the motion between the floating plate and the connection member is smoother and the motion trajectory is controllable.

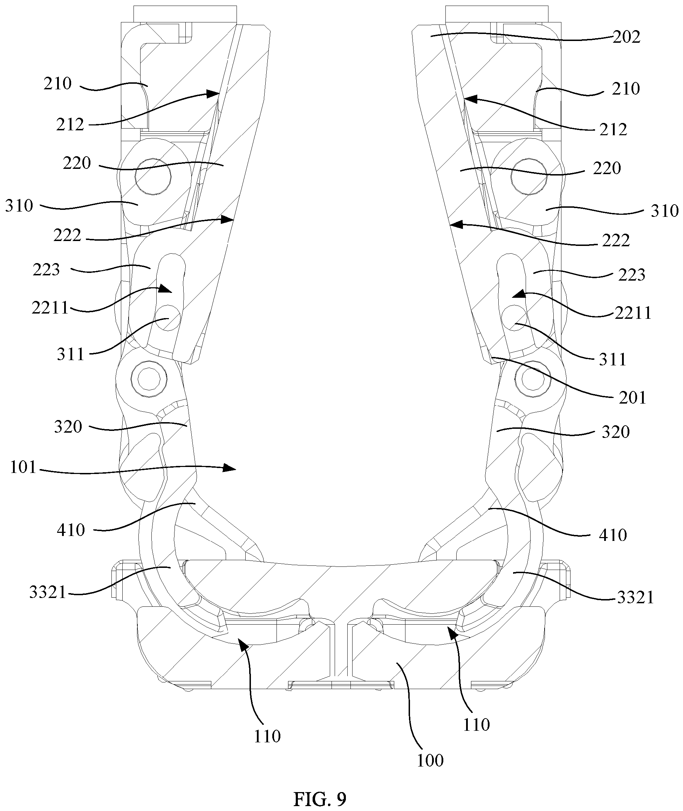

As shown in FIG. 8 and FIG. 9, in some embodiments, the floating plate 220 includes a first support surface 222 for forming the support structure 103, and the mating portion 221 is provided below the first support surface 222, and the mating portion 221 overlaps the limiting portion 311 to enable the limiting mating between the limiting portion 311 and the mating portion 221. In this way, the arrangement of the mating portion 221 below the first support surface 222 does not interfere with the supporting function of the floating plate 220, and is easy to make the mating portion 221 limitingly mate with the first connecting rod 310 below the floating plate 220.

When the hinge mechanism 10b switches from the folded state to the unfolded state, the floating plate 220 moves with the connection member 210, which makes it easy for the mating portion 221 to overlap the limiting portion 311 to enable the limiting mating between the mating portion 221 and the limiting portion 311. When the connection member 210 is in the unfolded state, the limiting portion 311 is inserted into the mating portion 221, which makes it easy to limit the floating plate 220 from tilting in a direction away from the base frame component 100.

As shown in FIG. 5 and FIG. 6, in some embodiments, the limiting concave portion is provided on the floating plate 220, and the limiting convex portion is provided on the first connecting rod 310.

In some embodiments, the floating plate 220 includes a hook body 223 provided below the first support surface 222, and a part of the hook body 223 is spaced apart from the first support surface 222 to form a limiting concave portion. In this way, the hook body 223 protrudes from the first support surface 222, so that a part of the hook body 223 is spaced apart from the first support surface 222 to form a limiting concave portion, making the structure of the floating plate 220 more compact.

As shown in FIG. 8, in some embodiments, when the hinge mechanism 10 b is in the unfolded state, the limiting portion 311 bears against the side wall of the mating portion 221 to limit the floating plate 220 from tilting in a direction away from the base frame component 100.

As shown in FIG. 5 to FIG. 10, in some embodiments, the limiting portion 311 includes a protrusion 3111, and the mating portion 221 includes a limiting groove 2211. When the hinge mechanism 10b is in the unfolded state, limiting mating between the protrusion 3111 and the limiting groove 2211 limits the floating plate 220 from tilting in a direction away from the base frame component 100. In this way, combined with the above analysis, it can be seen that the hinge mechanism 10b can be prevented from being over-expanded to cause damage to elements or separation and thus failure of related elements, or even damage to the flexible display screen 10a. Therefore, the hinge mechanism 10b can not only prevent the floating plate 220 from tilting, but also use the floating plate 220 to reliably support the flexible display screen 10a.

In some embodiments, the protrusion 3111 is fixed to the first connecting rod 310, and the floating plate 220 is provided with a limiting groove 2211. In this way, the assembly is convenient and easy to implement.

In combination with the above-mentioned embodiments of the mating portion 221, in some embodiments, the first connecting rod 310 is provided with a mating notch 312, at least a part of the protrusion 3111 is protruded in the mating notch 312, and a part of the floating plate 220 is inserted into the mating notch 312 to realize limiting mating between mating portion 221 and the protrusion 3111. In this way, the mating notch 312 can avoid the movement of the floating plate 220 along with the connection member 210. At least a part of the protrusion 3111 is protruded in the mating notch 312, and the avoidance space is fully utilized to achieve the cooperation with the limiting groove 2211, so that the connection between the first connecting rod 310 and the floating plate 220 is compact, and the compactness of the structure of the hinge mechanism 10b is further improved.

Optionally, as shown in FIG. 5 to FIG. 10, in some embodiments, there are two protrusions 3111, which are spaced from each other and arranged on two opposite sides of the mating notch 312. In this way, the two protrusions 3111 cooperate with the limiting groove 2211 to improve the reliability of the first connecting rod 310 in limiting the movement of the floating plate 220. Moreover, the two protrusions 3111 are provided in the mating notch 312, making full use of the accommodation space 101 of the mating notch 312.

As shown in FIG. 8 to FIG. 10, in some embodiments, the floating plate 220 includes a first support surface 222 for forming a support structure 103 and a limiting groove 2211 provided below the first support surface 222, and a part of the limiting groove 2211 is inserted into the mating notch 312 to realize limiting mating between the protrusion 3111 and the limiting groove 2211. In this way, the arrangement of the limiting groove 2211 below the first support surface 222 does not interfere with the supporting function of the floating plate 220. And, it is easy for the limiting mating with the mating notch 312 of the first connecting rod 310 below the floating plate 220, further improving the compactness of the connection between the first connecting rod 310 and the floating plate 220.

As shown in FIG. 8 to FIG. 10, in some embodiments, the length direction of the limiting groove 2211 extends along the width direction of the floating plate 220, and the protrusion 3111 slides in the limiting groove 2211 during the switching between the unfolded state and the folded state of the hinge mechanism 10b. In this way, by the sliding of the protrusion 3111 in the limiting groove 2211, the motion between the floating plate 220 and the connection member 210 is more stable, and the motion trajectory is controllable.

When the hinge mechanism 10b is in the unfolded state, the protrusion 3111 bears against the side wall of the limiting groove 2211 to limit the floating plate 220 from tilting in a direction away from the base frame component 100. In this way, the embodiment can prevent the hinge mechanism 10b from being over-extended to cause damage to elements or separation and thus failure of related elements, or even damage to the flexible display screen 10a. Thus, the hinge mechanism 10b can prevent the floating plate 220 from tilting, and can also use the floating plate 220 to reliably support the flexible display screen 10a.

It can be understood that the limiting concave portion includes at least one of a limiting groove 2211, a limiting hole (closed state), a limiting channel, etc. The limiting convex portion matches with the limiting concave portion to limit the range of motion of the floating plate 220.

In some embodiments, at least one of the side wall of the mating portion and the limiting portion is provided with a first lead-in portion (not shown), and a part of the limiting portion is introduced into the mating portion through the first lead-in portion. In this way, the first lead-in portion is used to facilitate the assembly of the mating portion and the limiting portion, thereby improving the convenience of assembly. It should be noted that the first lead-in portion includes a guide arc surface or a guide inclined surface.

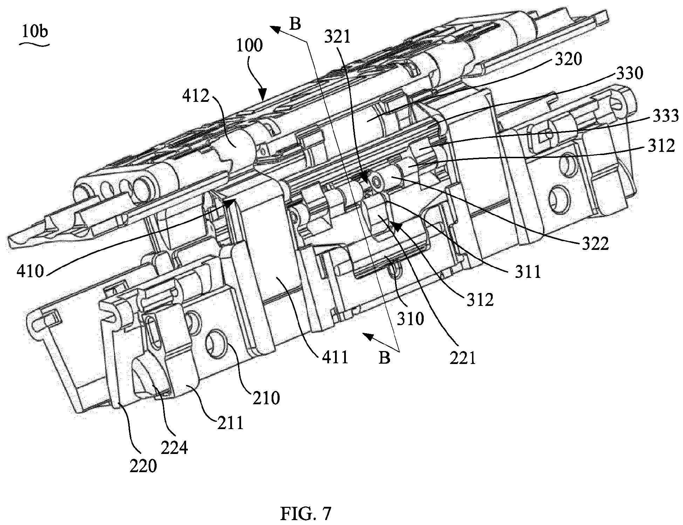

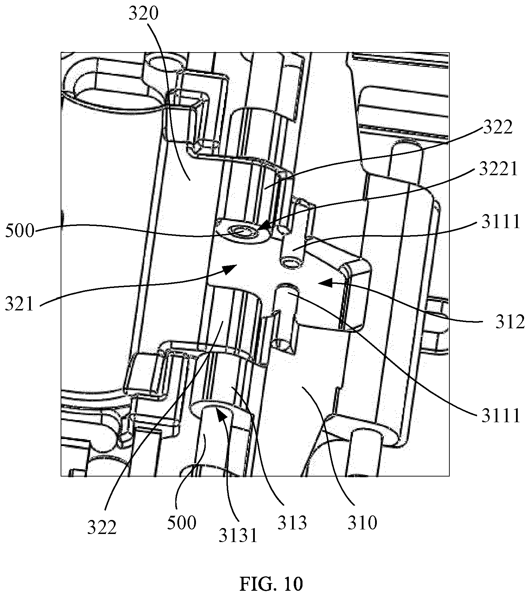

In combination with the mating notch 312 in any of the above embodiments, as shown in FIG. 7 and FIG. 10, in some embodiments, the second connecting rod component 400 includes a movable member 410, the movable member 410 is rotatably connected to the base frame component 100, and the movable member 410 is slidably connected to the connection member 210. The mating portion 221 is provided on the floating plate 220, and the first connecting rod component 300 includes a second connecting rod 320 and a transmission member 330. One end of the first connecting rod 310 is rotatably connected to the connection member 210, and the other end of the first connecting rod 310 is rotatably connected to one end of the second connecting rod 320 and one end of the transmission member 330. The other end of the second connecting rod 320 is rotatably connected to the base frame component 100, and the other end of the transmission member 330 is rotatably connected to the movable member 410. The one end of the second connecting rod 320 is provided with an avoidance notch 321 for avoiding the mating portion 221, and the avoidance notch 321 is connected to the mating notch 312 to form an accommodating space 101 for accommodating the mating portion 221. In this way, the connection between the avoidance notch 321 and the mating notch 312 forms the accommodating space 101 for accommodating the mating portion 221, which can effectively avoid the mating portion 221, so that the arrangement of the mating portion 221 does not interfere with the motion between the second connecting rod 320 and the first connecting rod 310. In addition, cooperation between the floating plate 220 and the first connecting rod component 300 is more close, further improving the structural compactness of the hinge mechanism 10b.

As shown in FIG. 7 to FIG. 9, in some embodiments, the connection member 210 includes a first connection portion 211. The floating plate 220 includes a second connection portion 224 rotatably connected to the first connection portion 211, and the second connection 224 and the mating portion 221 are spaced apart along the width direction of the floating plate 220. The limiting mating between the mating portion 221 and the limiting portion 311 limits the range of rotation of the first connection portion 211 relative to the second connection portion 224. In this way, the floating plate 220 is rotatably connected to the first connection portion 211 through the second connection 224, so that the floating plate 220 can swing relative to the connection member 210. And, with the limiting mating between the mating portion 221 and the limiting portion 311, the swing range of the floating plate 220 can be limited to make floating plate 220 swing along a set trajectory, thereby improving the controllability of the motion of the floating plate 220.

It should be noted that there are many specific implementations for the rotatable connection between the first connection portion 211 and the second connection portion 224, including hinge connection, shaft connection, cooperation between an arc-shaped guide rail and an arc-shaped guide groove, etc.

As shown in FIG. 7 to FIG. 9, in some embodiments, the floating plate 220 includes a first side 201 and a second side 202 spaced apart along the width direction of the floating plate 220, and the second connection portion 224 is provided close to the second side 202. In this way, the first side 201 of the floating plate 220 can move relative to the connection member 210, so that when the floating plate 220 is in the unfolded state, the first side 201 is provided away from the connection member 210 to facilitate supporting of the flexible display screen 10a. When the floating plate 220 is in the folded state, the first side 201 is provided close to or against the connection member 210 to better form an avoidance space.

As shown in FIG. 8 and FIG. 9, in some embodiments, the connection member 210 is provided with an avoidance slope 212. When the hinge mechanism 10b is in the unfolded state, the first side 201 of the floating plate 220 is spaced apart from the avoidance slope 212, so that the floating plate 220 and the base frame form the support structure 103. When the hinge mechanism 10b is in the folded state, the floating plate 220 is arranged against the avoidance slope 212. In this way, the avoidance slope 212 enables the floating plate 220 to move relative to the connection member 210, so as to form a larger accommodating space 101 in the folded state. When the hinge mechanism 10b is in the unfolded state, the first side 201 can be away from the avoidance slope 212, so that the floating plate 220 can be used to form the support structure 103.

In combination with the embodiment of the mating portion 221, as shown in FIG. 7 and FIG. 11 to FIG. 14, in some embodiments, the second connecting rod component 400 includes a movable member 410, the movable member 410 is rotatably connected to the base frame component 100, and the movable member 410 is slidably connected to the connection member 210. The first connecting rod component 300 includes a second connecting rod 320 and a transmission member 330. One end of the first connecting rod 310 is rotatably connected to the connection member 210, and the other end of the first connecting rod 310 is rotatably connected to one end of the second connecting rod 320 and one end of the transmission member 330. The other end of the second connecting rod 320 is rotatably connected to the base frame component 100, and the other end of the transmission member 330 is rotatably connected to the movable member 410. One of the transmission member 330 and the second connecting rod 320 is provided with a pressing protrusion 331. When the hinge mechanism 10b is in the folded state, the connection member 210 and the base frame component 100 are arranged at an angle, and the pressing protrusion 331 presses against the other one of the transmission member 330 and the second connecting rod 320, so that the transmission member 330 squeezes the second connecting rod 320. In this way, when the foldable electronic device 10 is in use, the hinge mechanism 10b can drive the housing body 102 to rotate through the bearing component 200 to realize folding or unfolding of the flexible display screen 10a (for example, switching between the unfolded state and the folded state). When the flexible display screen 10a is in the unfolded state, the hinge mechanism 10b is also in the unfolded state, and supports the flexible display screen 10a through the bearing component 200 and the base frame component 100. In the procedure of switching the hinge mechanism 10b from the unfolded state to the folded state, the movable member 410 can rotate relative to the base frame component 100 and drive the connection member 210 to slide along a set direction of the movable member 410. During this procedure, the movable member 410 drives the second connecting rod 320 and the first connecting rod 310 to rotate through the transmission member 330 to limit the swing direction of the connection member 210. When the hinge mechanism 10b is in the folded state, the connection member 210 and the base frame component 100 are arranged at an angle, and the pressing protrusion 331 presses against the other one of the transmission member 330 and the second connecting rod 320, so that the transmission member 330 squeezes the second connecting rod 320. The embodiment can make the transmission member 330 closely cooperate with the second connecting rod 320 and the first connecting rod 310, and rotation is not easy to occur, and thus abnormal noise is not easy to be generated. The transmission member 330, the second connecting rod 320 and the first connecting rod 310 will not rotate easily, which reduces wear, improves the durability of the hinge mechanism 10b, and can also better protect the flexible display screen 10a in the folded state.

In this way, when the hinge mechanism 10b is in the folded state, the connecting rods cooperate with each other closely and are less likely to produce abnormal noise, which is beneficial to improving user experience of the foldable electronic device 10.

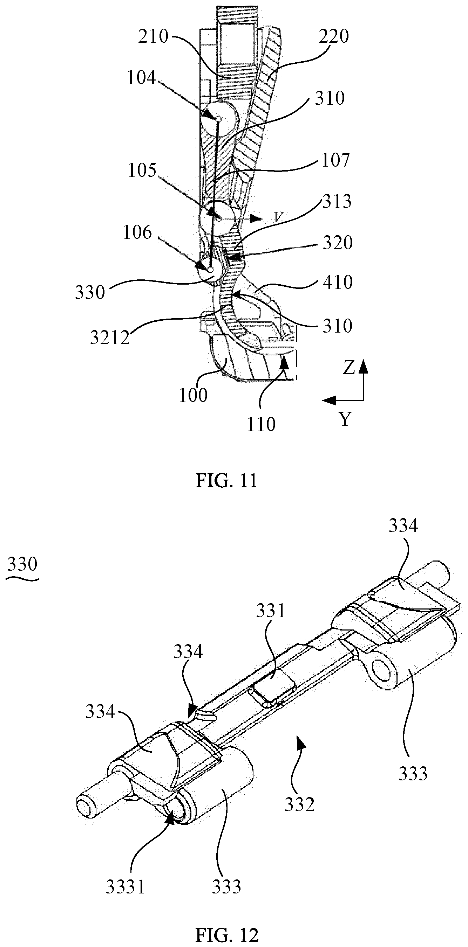

As shown in FIG. 11, in some embodiments, when the hinge mechanism 10b is in the folded state, the pressing protrusion 331 bears against the other one of the transmission member 330 and the second connecting rod 320, so that a part of the second connecting rod 320 is pushed up toward a center line direction of the base frame component 100.

As shown in FIG. 11, in some embodiments, the other end of the first connecting rod 310 is rotatably connected to the connection member 210 and has a first rotation center 104. The other end of the transmission member 330 is rotatably connected to the other end of the second connecting rod 320 and has a second rotation center 105. One end of the transmission member 330 is rotatably connected to the movable member 410 and has a third rotation center 106. When the hinge mechanism 10b is in the folded state, the first rotation center 104 and the third rotation center 106 form a first connection line 107, and the second rotation center 105 is arranged on the inner side of the first connection line 107, so that the pressing protrusion 331 pushes up the second connecting rod 320. In this way, it can be ensured that when the hinge mechanism 10b is in the folded state, the pressing protrusion 331 presses against the other one of the transmission member 330 and the second connecting rod 320, so that a part of the first connecting rod is pushed up toward the accommodation space 101.

Optionally, in some embodiments, the pressing protrusion 331 is fixed to the transmission member 330. In this way, the manufacturing difficulty of the transmission member 330 is not increased, and the assembly of the hinge mechanism 10b is not affected, and the implementation is easy.

As shown in FIG. 12, in some embodiments, the transmission member 330 is provided with a first notch 332, and a part of the second connecting rod 320 is provided in the first notch 332 and is rotatably connected to a part of the transmission member 330. The pressing protrusion 331 is fixed to the transmission member 330 and is provided at an edge close to the first notch 332. In this way, a part of the first connecting rod 310 is accommodated by the first notch 332, so that the cooperation of first connecting rod component 300 is more close, and the structure is compact.

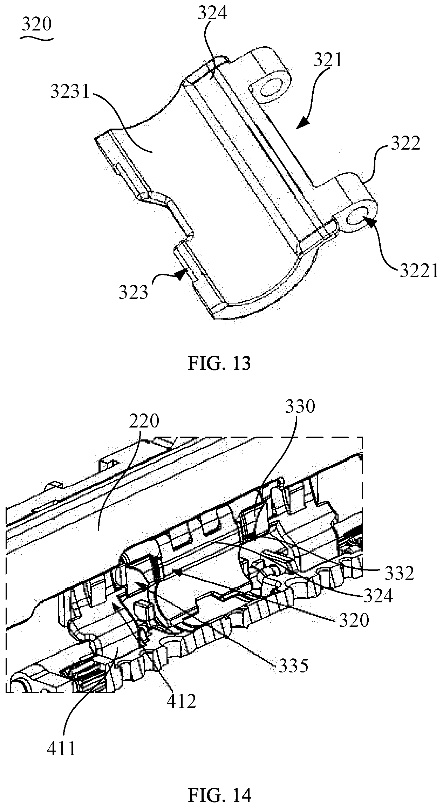

As shown in FIG. 12 and FIG. 14, in some embodiments, the other end of the transmission member 330 includes two first rotation portions 333 spaced apart to form the first notch 332, the first rotation portion 333 is rotatably connected to the other end of the second connecting rod 320 and one end of the first connecting rod 310, and the pressing protrusion 331 is provided between the two first rotation portions 333. In this way, by providing the first notch 332 to accommodate a part of the second connecting rod 320, the transmission member 330 and the second connecting rod 320 closely cooperate and do not interfere with each other.

As shown in FIG. 12 to FIG. 14, in some embodiments, a second rotation portion 313 is provided at one end of the first connecting rod 310, and a third rotation portion 322 is provided at the other end of the second connecting rod 320. The third rotation portion 322 is rotatably connected to the second rotation portion 313, and is embedded in the first notch 332, and is respectively rotatably connected to the first rotation portion 333. In this way, a part of the first connecting rod 310 can also be accommodated by the first notch 332, so that the third rotation portion 322 can be embedded in the first notch 332 after being rotatably connected to the second rotation portion 313, and is rotatably connected to the first rotation portion 333, thereby improving the compactness of the structure of the hinge mechanism 10b.

As shown in FIG. 3, FIG. 10, and FIG. 6 to FIG. 9, in some embodiments, the hinge mechanism 10b further includes a first rotation shaft 500, the first rotation portion 333 is provided with a first through hole 3331, the second rotation portion 313 is provided with a second through hole 3131, the third rotation portion 322 is provided with a third through hole 3221, and the second rotation portion 313 and the third rotation portion 322 are nested, so that the first through hole 3331, the second through hole 3131, and the third through hole 3221 are arranged along the same axis and are respectively in sleeve mating with the first rotation shaft 500. In this way, it is convenient to realize sleeve mating between the first rotation shaft 500 and the first through hole 3331, the second through hole 3131, and the third through hole 3221, so as to realize the coaxial rotation of the first rotation portion 333, the second rotation portion 313, and the third rotation portion 322, thereby improving the convenience of assembling the hinge mechanism 10b.

Further, as shown in FIG. 8, FIG. 9, FIG. 11 and FIG. 13, in some embodiments, the second connecting rod 320 includes a fourth rotation portion 323 rotatably connected to the base frame component 100 and a plate 324 fixed between the fourth rotation portion 323 and the third rotation portion 322. When the hinge mechanism 10b is in the folded state, the plate 324 bears against the pressing protrusion 331. In this way, the plate 324 cooperates with the pressing protrusion 331, so that the pressing between the plate 324 and the pressing protrusion 331 is reliable, and implementation is easy.

As shown in FIG. 8 and FIG. 9, in some embodiments, the fourth rotation portion 323 includes an arc-shaped guide body 3231, and the base frame component 100 is provided with an arc-shaped guide groove 110 that performs guidance mating with the arc-shaped guide body 3231. In this way, by providing the arc-shaped guide groove 110, the thickness space of the base frame component 100 can be fully utilized to accommodate the arc-shaped guide body 3231, so that the thickness of the hinge mechanism 10b can be made thinner to adapt to the development of lightness and thinness of the foldable electronic device 10.

Referring to FIG. 7 and FIG. 14, in some embodiments, the movable member 410 includes a first connection body 411 slidably connected to the connection member 210, a second connection body 412 rotatably connected to the base frame component 100, and a transition body 413 fixed between the first connection body 411 and the second connection body 412, and the transmission member 330 is provided with a first guide surface 334. When the hinge mechanism 10b is in the folded state, the first guide surface 334 is provided between the transition body 413 and the second connecting rod 320, and forms a limiting surface with the transition body 413 and a part of the second connecting rod 320. In this way, by providing the first guide surface 334 between the transition body 413 and the second connecting rod 320, as smooth as possible transition is provided between the second connecting rod 320 and the transition body 413 along the length direction of the base frame component 100, and the flexible display screen 10a will not be pushed up. It is convenient to use the limiting surface to limit the movement of the flexible display screen 10a to better protect the flexible display screen 10a.

It should be noted that the first guide surface 334 includes a guide arc surface or a guide inclined surface.

Optionally, in some embodiments, the first guide surface 334 includes a guide slope, and when the hinge mechanism 10b is in the folded state, the guide slope is inclined from the second connecting rod 320 to the transition body 413, and such structure is easy to manufacture.

In combination with FIG. 2 to FIG. 10, the first connecting rod component 300 and the second connecting rod component 400 of the present disclosure cooperate to form a three-stage hinge mechanism 10b. The first connecting rod 310 is rotatably connected to the connection member 210 and is connected to the base frame component 100 through the second connecting rod 320.

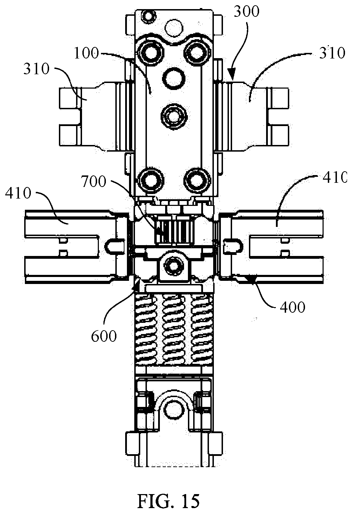

In combination with the embodiments of the mating portion 221, as shown in FIG. 15, in some embodiments, the second connecting rod component 400 includes a movable member 410, the movable member 410 is rotatably connected to the base frame component 100, the movable member 410 is slidably connected to the connection member 210. A part of the first connecting rod 310 is rotatably connected to the base frame component 100. In this way, the two-stage hinge mechanism 10b is formed by the cooperation of the movable member 410 and the first connecting rod 310, so that the hinge mechanism 10b can form a water drop-shaped accommodation space 101 in the folded state, which can meet the bending space required for the bending of the flexible display screen 10a and improve the service life of the flexible display screen 10a. The first connecting rod 310 can also be used to limit the range of motion of the floating plate 220.

In other embodiments, the first connecting rod component 300 further includes at least one connecting rod provided between the second connecting rod 320 and the first connecting rod 310 to cooperate to form a four-stage connecting rod mechanism, a five-stage connecting rod mechanism, and the like.

In combination with the embodiments of the mating portion, in some embodiments, the first connecting rod component further includes at least one connecting rod. The first connecting rod is rotatably connected to the connection member through at least one connecting rod. In this situation, the first connecting rod is indirectly rotatably connected to the connection member. If the first connecting rod component and the second connecting rod component form a three-stage hinge mechanism, the first connecting rod can be used by the transmission member or the second connecting rod in the aforementioned embodiment. That is, the transmission member and/or the second connecting rod in the aforementioned embodiments can also be used to limitingly mate with the floating plate to limit the range of motion of the floating plate. The first connecting rod component and the second connecting rod component form a four-stage connecting rod mechanism, a five-stage connecting rod mechanism, etc., and with reference to the aforementioned structure, the first connecting rod can also be used to limit the motion of the floating plate.

In some embodiments, the first connecting rod is rotatably connected to the base frame component through at least two connecting rods. The first connecting rod component and the second connecting rod component form a four-stage connecting rod mechanism, a five-stage connecting rod mechanism, etc. Referring to the aforementioned structure, the first connecting rod directly rotatably connected to the connection member can also be used to limit the motion of the floating plate.

It should be noted that the first connecting rod can directly limitingly cooperate with the floating plate (as shown in FIG. 2 to FIG. 10) to limit the range of motion of the floating plate. In other embodiments, the first connecting rod component also includes a transmission unit, and the first connecting rod is movably connected to the floating plate through the transmission unit to limit the range of motion of the floating plate relative to the connection member. In this way, the first connecting rod can also indirectly limit the range of motion of the floating plate relative to the connection member through the transmission unit, so that the positions of the first connecting rod and the floating plate can be more flexible, and it is also convenient to design the transmission unit according to the limitations required by the floating plate.

It should be noted that the first connecting rod component can limitingly mate with the floating plate through a connecting rod (as shown in FIG. 2 to FIG. 10) to limit the range of motion of the floating plate. In other embodiments, the first connecting rod component can limitingly mate with the floating plate through at least two connecting rods to limit the range of motion of the floating plate. For example, in some embodiments, at least two first connecting rods are included, at least two first connecting rods cooperate to form a first connecting rod component, and at least two first connecting rods are movably connected to the floating plate to limit the range of motion of the floating plate relative to the connection member.

In some embodiments, the floating plate 220 is rotatably connected or slidably connected to the connection member 210. The motion between the floating plate 220 and the connection member 210 can be flexibly controlled according to the deformation requirements of the flexible display screen 10a, and the first connecting rod component 300 and the second connecting rod component 400.

Based on any embodiment of the above-mentioned connection member 210, as shown in FIG. 15, in some embodiments, the hinge mechanism 10b further includes a damping component 600, and the damping component 600 performs rotation cooperation with the first connecting rod component 300 and/or the second connecting rod component 400 with damping. In this way, by providing the damping component 600, the connecting rod component can be rotatably connected to the base frame component 100 with damping, so that the foldable electronic device 10 will not rotate easily, and it is easy to support or limit the flexible display screen 10a, which is convenient to use. It is also convenient to use the first connecting rod component 300 to limit the motion of the floating plate, thereby improving the motion accuracy of the hinge mechanism.

It should be noted that the damping assembly 600 can be provided on any rotation component of the first connecting rod component 300 and the second connecting rod component 400 as long as the above requirements are met.

It should be noted that there are other ways to implement the "damping component 600", for example, using a friction plate to increase the rotational friction of the connecting rod component, or, using an elastic member to increase the rotational resistance of the connecting rod component, or, using a magnetic member to increase the rotational resistance of the connecting rod component, etc.

It should be noted that "suspend" can be understood as follows: when no driving force is applied to the rotation member, it can remain at a certain position, and when a certain force is applied to the rotation member, the rotation member can rotate, and when the rotation force is removed or reduced, the rotation member can stop rotating and maintain at a certain position. The "suspend" function enables the foldable electronic device to prop up at any angle with an angle range. The first connecting rod component and/or the second connecting rod component and the base frame component are arranged in a suspend manner.

It can be understood that the damping component 600 includes a locked state and a suspend state. When the damping component 600 is in the locked state, the first connecting rod component can be locked in the unfolded state and/or the folded state, so that the first connecting rod component can be used to limit the floating plate. When the damping component 600 is in the suspend state, the first connecting rod component can suspend in the procedure of switching between the unfolded state and the folded state, and the first connecting rod component can also be used to limit the rotation of the floating plate. The rotational resistance which the hinge mechanism is subject to when the damping component 600 is in the locked state is greater than the rotational resistance which the hinge mechanism is subject to when the damping component 600 is in the suspend state.

As shown in FIG. 15, in some embodiments, the first connecting rod component 300, the second connecting rod component 400 and the bearing component 200 correspond to each other to form a first group, and at least two first groups are spaced apart on both sides of the base frame component 100. The hinge mechanism 10b also includes a synchronization component 700. The connecting rod components correspondingly arranged on both sides of the base frame component 100 are connected to rotate synchronously through the synchronization component 700. In this way, the hinge mechanism 10b on both sides of the base frame component 100 is rotated synchronously by using the synchronization component 700 to realize the folding and unfolding of the flexible display screen 10a.

The synchronization component can be implemented in many ways, including but not limited to the above-mentioned gear transmission group, and also including other ways of implementing synchronous rotation, such as a pulley mechanism, a sprocket mechanism, etc.

In combination with any of the above embodiments, in some embodiments, the hinge mechanism 10b can suspend at any angle within the range of 0° to 180°, or in other words, the hinge mechanism 10b can prop up at any angle within the range of 0° to 180°. In this way, the hinge mechanism 10b can suspend within the range of 45° to 135° to maintain at a suspend state. Immediate rotation and immediate stop can be realized when the hinge mechanism 10b is in the suspend state, which is convenient for users to use the foldable electronic device 10 at multiple angles, thereby improving the user experience of the foldable electronic device 10.

In any of the above embodiments of the movable member 410, the rotation range of the movable member 410 in the suspend state is A, A ≥ 50°. In this way, the rotation range can be flexibly set according to actual needs, for example, A = 50°, 60°, 90°, 100°, 110° , 120° , 130° , 150° , etc. Since the hinge mechanism is provided with two movable members 410 which perform motions synchronously, when the movable member can suspend within 90 ° , the hinge mechanism can realize suspension in 150° .

In some embodiments, the movable member 410 can be suspended and rotated to allow the hinge mechanism 10b to suspended or prop up at any angle within the range of 0° to 180°. In this case, the movable member 410 can also be called a synchronization rod.

Optionally, in some embodiments, the base frame component 100 includes a base frame body and a decorative housing (not shown) fixedly connected to the base frame body, and the length direction of the decorative housing is set in the same direction as the length direction of the floating plate 220. In this way, the decorative housing can not only protect the hinge mechanism 10b, but also cooperate with the housing body 102 to improve the appearance of the foldable electronic device 10.

Optionally, in some embodiments, the base frame component 100 further includes a support plate provided on the base frame body, so that the support plate cooperates with the floating plate 220 to form the support structure 103 or the accommodation space 101. In addition, the support plate cooperates with the decorative housing to better protect the first connecting rod component 300 and the second connecting rod component 400, etc.

It should be noted that "arranged at an angle" includes an acute angle, a right angle and an obtuse angle, but does not include a straight angle.

The foldable electronic device 10 disclosed herein may include a device with a display function, such as a ranging device, a scanning device, a shooting device, a handheld device, a vehicle-mounted device, a wearable device, a monitoring device, a cellular phone, a smart phone, a personal digital assistant computer, a tablet computer, a notebook computer, a laptop computer, a video camera, a video recorder, a camera, or a vehicle-mounted computer.

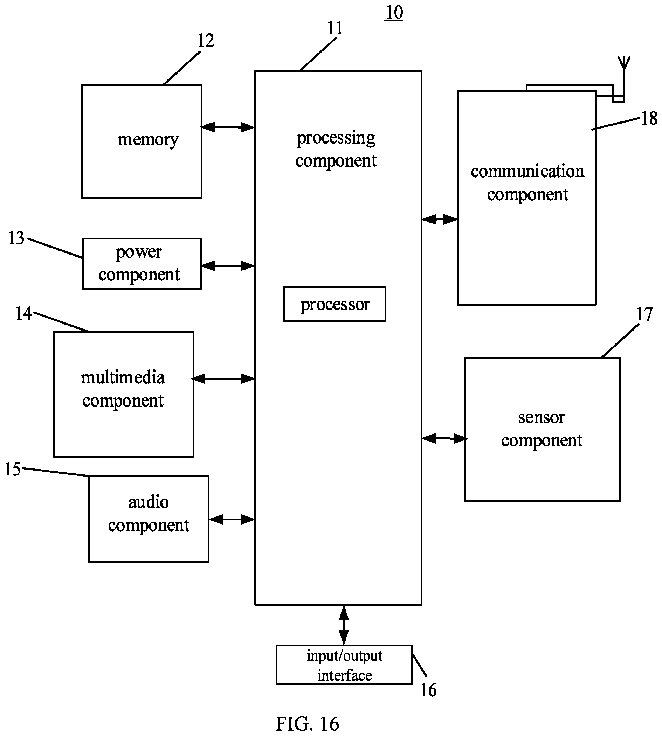

As shown in FIG. 16, in some embodiments, the foldable electronic device 10 may further include one or more of the following components: a processing component 11, a memory 12, a power component 13, a multimedia component 14, an audio component 15, an input/output (I/O) interface 16, a sensor component 17, and a communication component 18.

The processing component typically controls overall operations of the foldable electronic device, such as the operations associated with display, telephone calls, data communications, camera operations, and recording operations. The processing component includes at least one or more processors to execute instructions to perform all or part of the steps in the above described methods. Moreover, the processing component includes at least one or more modules which facilitate the interaction between the processing component and other components. For instance, the processing component includes at least a multimedia module to facilitate the interaction between the multimedia component and the processing component.

The memory is configured to store various types of data to support the operation of the foldable electronic device. Examples of such data include instructions for any applications or methods operated on the foldable electronic device, contact data, phonebook data, messages, pictures, video, etc. The memory may be implemented using any type of volatile or non-volatile memory devices, or a combination thereof, such as a static random access memory, an erasable programmable read-only memory, a programmable read-only memory, a read-only memory, a magnetic memory, a flash memory, a magnetic or optical disk.

The control main board includes a processing component and a memory.

The power component provides power to various components of the foldable electronic device. The power component includes at least a power management system, one or more power sources, and any other components associated with the generation, management, and distribution of power in the foldable electronic device.

The multimedia component includes a display module in the present disclosure to facilitate human-machine interaction. If the display module includes a touch panel, the display module may be implemented as a touch screen to receive input signals from a user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component includes a front camera and/or a rear camera. The front camera and the rear camera may receive an external multimedia datum while the foldable electronic device is in an operation mode, such as a photographing mode or a video mode. Each of the front camera and the rear camera may be a fixed optical lens system or have focus and optical zoom capability.

The audio component is configured to output and/or input audio signals. For example, the audio component includes a microphone ("MIC") configured to receive an external audio signal when the foldable electronic device is in an operation mode, such as a call mode, a recording mode, and a voice recognition mode. The received audio signal may be further stored in the memory or transmitted via the communication component. In some embodiments, the audio component further includes a speaker to output audio signals.

The input/output interface provides an interface between the processing component and peripheral interface modules, such as a keyboard, a click wheel, buttons, and the like. The buttons may include, but are not limited to, a home button, a volume button, a starting button, and a locking button.

The sensor component includes one or more sensors to provide status assessments of various aspects of the foldable electronic device. For instance, the sensor component may detect an open/closed status of the foldable electronic device, relative positioning of components, e.g., the display and the keypad, of the foldable electronic device, a change in position of the foldable electronic device or a component of the foldable electronic device, a presence or absence of user contact with the foldable electronic device, an orientation or an acceleration/deceleration of the foldable electronic device, and a change in temperature of the foldable electronic device. The sensor component includes at least a proximity sensor configured to detect the presence of nearby objects without any physical contact. The sensor component also includes at least a photo-sensitive element, such as a CMOS or CCD image sensor, for use in imaging applications. In some embodiments, the sensor component also includes at least an accelerometer sensor, a gyroscope sensor, a magnetic sensor, a pressure sensor, or a temperature sensor.

The communication component is configured to facilitate communication, wired or wirelessly, between the foldable electronic device and other devices. The foldable electronic device can access a wireless network based on a communication standard, such as WiFi, 2G, 3G, 4G, or 6G, etc. or a combination thereof. In one example embodiment, the communication component receives a broadcast signal or broadcast associated information from an external broadcast management system via a broadcast channel. In one example embodiment, the communication component further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In the description of the present disclosure, it needs to be understood that the terms "center", "longitudinal", "lateral", "length", "width", "thickness", "up/upper", "down/lower", "front", "rear", "left", "right", "vertical", "horizontal", "top", "bottom", "inside", "outside", "clockwise", "counterclockwise", "axial", "radial", "circumferential" and so on indicate orientations or positional relationships based on the orientations or positional relationships shown in the accompanying drawings, and are only for the convenience of describing the present disclosure and simplifying the description, and do not indicate or imply that the mentioned device or element must have a specific orientation, or must be constructed and operated in a specific orientation, and therefore these terms should not be understood as a limitation on the present disclosure.

In addition, the terms "first", "second", etc. are used for descriptive purposes only and should not be understood as indicating or implying relative importance or implicitly indicating the number of technical features indicated. Thus, a feature defined as "first", "second", etc. may explicitly or implicitly include at least one of the features. In the description of the present disclosure, the meaning of "a plurality of" is at least two, such as two, three, etc., unless otherwise clearly and specifically defined.

In the present disclosure, unless otherwise clearly specified and defined, the term "install", "connect", "couple", or "fix" and so on should be understood in a broad sense, for example, it can be a fixed connection, a detachable connection, or an integral connection; it can be a mechanical connection or an electrical connection; it can be a direct connection or an indirect connection through an intermediate medium, it can be the internal connection of two elements or an interaction relationship between two elements, unless otherwise clearly defined. For those of ordinary skill in this art, the specific meanings of the above terms in the present disclosure can be understood according to specific circumstances.

In the present disclosure, unless otherwise clearly specified and defined, a first feature being "above" or "below" a second feature may mean that the first and second features are in direct contact, or the first and second features are in indirect contact through an intermediate medium. Moreover, a first feature being "above", "on" or "over" a second feature may mean that the first feature is directly above or obliquely above the second feature, or simply means that the first feature is higher in level than the second feature. A first feature being "below", "under" or "underneath" a second feature may mean that the first feature is directly below or obliquely below the second feature, or simply means that the first feature is lower in level than the second feature.

It should be noted that when an element is referred to as being "fixed to", "provided on", "fixedly arranged on" or "installed on" another element, it may be directly on the other element or there may be an intermediate element. When an element is considered to be "connected to" another element, it may be directly connected to the other element or there may be an intermediate element at the same time. Furthermore, when an element is considered to be "fixedly connected to" another element, the two elements may be fixed in a detachable connection manner or in a non-detachable connection manner, such as socketing, snap-fitting, integral molding, welding, etc., which can be achieved in traditional technologies and will not be repeated here.

The technical features of the above embodiments may be combined arbitrarily. To make the description concise, not all possible combinations of the technical features in the above embodiments are described. However, as long as there is no contradiction in the combination of these technical features, the combination should be considered to be within the scope of this specification.

The above embodiments only show several implementations of the present disclosure, and the descriptions thereof are relatively specific and detailed, but they cannot be understood as limiting the scope of the present disclosure. It should be pointed out that, for those of ordinary skill in this art, several variations and improvements can be made without departing from the inventive concept of the present disclosure, and these all belong to the protection scope of the present disclosure.

## Claims

1. A hinge mechanism, comprising:
a base frame component (100);
a bearing component (200) comprising a connection member (210) and a floating plate (220) movably connected to the connection member (210);
a first connecting rod component (300), wherein the first connecting rod component (300) is rotatably connected to the base frame component, and the first connecting rod component (300) is rotatably connected to the connection member (210); and
a second connecting rod component (400), wherein the second connecting rod component is rotatably connected to the base frame component (100) and is slidably connected to the connection member (210), the first connecting rod component (300) and the second connecting rod component (400) cooperate with each other to drive the connection member (210) to flip relative to the base frame component (100), so that the hinge mechanism has a folded state and an unfolded state;
wherein the first connecting rod component (300) is at least capable of limitingly mating with the floating plate (220) when the hinge mechanism is in the unfolded state and/or the folded state, so as to limit a range of motion of the floating plate (220) relative to the connection member (210).

2. The hinge mechanism according to claim 1, wherein when the hinge mechanism is in the unfolded state, at least a part of the floating plate (220) and the base frame component (100) form a support structure, and when the hinge mechanism is in the folded state, the floating plate (220) and the base frame component (100) are arranged at an angle to form an avoidance space; and/or
wherein the first connecting rod component (300) comprises a first connecting rod rotatably connected to the connection member (210), and a part of the first connecting rod is movably connected to the floating plate (220) to limit the range of motion of the floating plate (220) relative to the connection member (210).

3. The hinge mechanism according to claim 2, wherein when the hinge mechanism is in the unfolded state, limiting mating between a part of the first connecting rod and the floating plate (220) is enabled to limit the floating plate (220) from tilting in a direction away from the base frame component (100).

4. The hinge mechanism according to claim 2 or 3, wherein one of the first connecting rod and the floating plate (220) is provided with a limiting portion, the other one of the first connecting rod and the floating plate (220) is provided with a mating portion to realize limiting mating between the mating portion and the limiting portion to limit the range of motion of the floating plate (220) relative to the connection member (210).

5. The hinge mechanism according to claim 4, wherein one of the limiting portion and the mating portion is a limiting concave portion, and the other one of the limiting portion and the mating portion is a limiting convex portion to realize limiting mating with the limiting concave portion; and/or
wherein one of the limiting portion and the mating portion is a guide rail, and the other one of the limiting portion and the mating portion is a guide portion that cooperates with the guide rail; and/or
wherein the mating portion slidably cooperates with the limiting portion to limit a range of rotation of the floating plate (220) relative to the connection member (210); and/or
wherein the floating plate (220) comprises a first support surface for forming the support structure, the mating portion is arranged below the first support surface, and the mating portion overlaps the limiting portion to realize limiting mating with the limiting portion.

6. The hinge mechanism according to claim 5, wherein a first lead-in portion is provided on at least one of a side wall of the mating portion and the limiting portion, and a part of the limiting portion is introduced into the mating portion through the first lead-in portion; or
wherein the limiting concave portion is provided at the floating plate (220), and the limiting convex portion is provided at the first connecting rod; and/or
wherein the floating plate (220) comprises a hook body provided below the first support surface, and a part of the hook body is spaced apart from the first support surface to form the limiting concave portion.

7. The hinge mechanism according to any one of claims 4 to 6, wherein the connection member (210) comprises a first connection portion, the floating plate (220) comprises a second connection portion rotatably connected to the first connection portion, and the second connection portion and the mating portion are spaced apart along a width direction of the floating plate (220);
wherein limiting mating is enabled between the mating portion and the limiting portion to limit a range of rotation of the first connection portion relative to the second connection portion.

8. The hinge mechanism according to claim 7, wherein the connection member (210) is provided with an avoidance slope, the floating plate (220) comprises a first side and a second side spaced apart along the width direction of the floating plate (220), and the second connection portion is provided close to the second side;
wherein when the hinge mechanism is in the unfolded state, the first side of the floating plate (220) is spaced apart from the avoidance slope to make the floating plate (220) and the base frame component (100) form the support structure, and when the hinge mechanism is in the folded state, the floating plate (220) is arranged against the avoidance slope.

9. The hinge mechanism according to any one of claims 4 to 8, wherein when the hinge mechanism is in the unfolded state, the limiting portion bears against a side wall of the mating portion to limit the floating plate (220) from tilting in a direction away from the base frame component (100); or
wherein the limiting portion comprises at least one protrusion, and the mating portion comprises a limiting groove, and when the hinge mechanism is in the unfolded state, limiting mating is enabled between the protrusion and the limiting groove to limit the floating plate (220) from tilting in a direction away from the base frame component (100).

10. The hinge mechanism according to claim 9, wherein the protrusion is fixed to the first connecting rod, and the floating plate (220) is provided with the limiting groove;
wherein the first connecting rod is provided with a mating notch, at least a part of the protrusion protrudes in the mating notch, and a part of the floating plate (220) is inserted into the mating notch to allow limiting mating between the limiting groove and the protrusion.

11. The hinge mechanism according to claim 10, wherein the at least one protrusion comprises two protrusions arranged at opposite sides of the mating notch and spaced apart from each other; and/or
wherein the floating plate (220) comprises a first support surface for forming the support structure and the mating portion arranged below the first support surface, and a part of the mating portion is inserted into the mating notch to allow limiting mating between the protrusions and the limiting groove.

12. The hinge mechanism according to claim 10 or 11, wherein a length direction of the limiting groove extends along a width direction of the floating plate (220), and the protrusion slides in the limiting groove during switching between the unfolded state and the folded state of the hinge mechanism;
wherein when the hinge mechanism is in the unfolded state, the protrusion bears against a side wall of the limiting groove to limit the floating plate (220) from tilting in a direction away from the base frame component (100).

13. The hinge mechanism according to any one of claims 10 to 12, wherein the second connecting rod component (400) comprises a movable member, the movable member is rotatably connected to the base frame component (100), and the movable member is slidably connected to the connection member (210);
wherein the mating portion is arranged on the floating plate (220), the first connecting rod component (300) comprises a second connecting rod and a transmission member,
wherein one end of the first connecting rod is rotatably connected to the connection member (210), and the other end of the first connecting rod is rotatably connected to one end of the second connecting rod and one end of the transmission member,
wherein the other end of the second connecting rod is rotatably connected to the base frame component (100), and the other end of the transmission member is rotatably connected to the movable member,
wherein the one end of the second connecting rod is provided with an avoidance notch for avoiding the mating portion, and the avoidance notch communicates with the mating notch to form an accommodating space for accommodating the mating portion.

14. The hinge mechanism according to any one of claims 2 to 13, wherein the second connecting rod component (400) comprises a movable member, the movable member is rotatably connected to the base frame component (100), and the movable member is slidably connected to the connection member (210);
wherein the first connecting rod component (300) comprises a second connecting rod and a transmission member;
wherein one end of the first connecting rod is rotatably connected to the connection member (210), and the other end of the first connecting rod is rotatably connected to one end of the second connecting rod and one end of the transmission member;
wherein the other end of the second connecting rod is rotatably connected to the base frame component (100), and the other end of the transmission member is rotatably connected to the movable member;
wherein one of the transmission member and the second connecting rod is provided with a pressing protrusion, and when the hinge mechanism is in the folded state, the connection member (210) and the base frame component (100) are arranged at an angle, and the pressing protrusion bears against the other one of the transmission member and the second connecting rod, so that the transmission member presses against the second connecting rod.

15. The hinge mechanism according to claim 14, wherein when the hinge mechanism is in the folded state, the pressing protrusion bears against the other one of the transmission member and the second connecting rod, so that a part of the second connecting rod is pushed up toward a center line direction of the base frame component (100); or
wherein the other end of the first connecting rod is rotatably connected to the connection member (210) and has a first rotation center, the other end of the transmission member is rotatably connected to the other end of the second connecting rod and has a second rotation center, and the one end of the transmission member is rotatably connected to the movable member and has a third rotation center;
wherein when the hinge mechanism is in the folded state, the first rotation center and the third rotation center form a first connection line, and the second rotation center is provided at an inner side of the first connection line, so that the pressing protrusion pushes up the second connecting rod.

## Amended claims

### Amended claims in accordance with Rule 137(2) EPC.

1. A hinge mechanism, comprising:
a base frame component (100);
a bearing component (200) comprising a connection member (210) and a floating plate (220) movably connected to the connection member (210);
a first connecting rod component (300), wherein the first connecting rod component (300) is rotatably connected to the base frame component, and the first connecting rod component (300) is rotatably connected to the connection member (210); and
a second connecting rod component (400), wherein the second connecting rod component is rotatably connected to the base frame component (100) and is slidably connected to the connection member (210), the first connecting rod component (300) and the second connecting rod component (400) cooperate with each other to drive the connection member (210) to flip relative to the base frame component (100), so that the hinge mechanism has a folded state and an unfolded state;
wherein the first connecting rod component (300) is at least capable of limitingly mating with the floating plate (220) when the hinge mechanism is in the unfolded state and/or the folded state, so as to limit a range of motion of the floating plate (220) relative to the connection member (210);
wherein when the hinge mechanism is in the unfolded state, at least a part of the floating plate (220) and the base frame component (100) form a support structure, and when the hinge mechanism is in the folded state, the floating plate (220) and the base frame component (100) are arranged at an angle to form an avoidance space;
wherein the first connecting rod component (300) comprises a first connecting rod rotatably connected to the connection member (210), and a part of the first connecting rod is movably connected to the floating plate (220) to limit the range of motion of the floating plate (220) relative to the connection member (210);
wherein one of the first connecting rod and the floating plate (220) is provided with a limiting portion, the other one of the first connecting rod and the floating plate (220) is provided with a mating portion to realize limiting mating between the mating portion and the limiting portion to limit the range of motion of the floating plate (220) relative to the connection member (210);
**characterized in that** one of the limiting portion and the mating portion is a limiting concave portion, and the other one of the limiting portion and the mating portion is a limiting convex portion to realize limiting mating with the limiting concave portion.

2. The hinge mechanism according to claim 1, wherein when the hinge mechanism is in the unfolded state, limiting mating between a part of the first connecting rod and the floating plate (220) is enabled to limit the floating plate (220) from tilting in a direction away from the base frame component (100).

3. The hinge mechanism according to claim 1, wherein a first lead-in portion is provided on at least one of a side wall of the mating portion and the limiting portion, and a part of the limiting portion is introduced into the mating portion through the first lead-in portion; or
wherein the limiting concave portion is provided at the floating plate (220), and the limiting convex portion is provided at the first connecting rod; and/or
wherein the floating plate (220) comprises a hook body provided below the first support surface, and a part of the hook body is spaced apart from the first support surface to form the limiting concave portion.

4. The hinge mechanism according to any one of claims 1 and 3, wherein the connection member (210) comprises a first connection portion, the floating plate (220) comprises a second connection portion rotatably connected to the first connection portion, and the second connection portion and the mating portion are spaced apart along a width direction of the floating plate (220);
wherein limiting mating is enabled between the mating portion and the limiting portion to limit a range of rotation of the first connection portion relative to the second connection portion.

5. The hinge mechanism according to claim 4, wherein the connection member (210) is provided with an avoidance slope, the floating plate (220) comprises a first side and a second side spaced apart along the width direction of the floating plate (220), and the second connection portion is provided close to the second side;
wherein when the hinge mechanism is in the unfolded state, the first side of the floating plate (220) is spaced apart from the avoidance slope to make the floating plate (220) and the base frame component (100) form the support structure, and when the hinge mechanism is in the folded state, the floating plate (220) is arranged against the avoidance slope.

6. The hinge mechanism according to any one of claims 1, and 3 to 5, wherein when the hinge mechanism is in the unfolded state, the limiting portion bears against a side wall of the mating portion to limit the floating plate (220) from tilting in a direction away from the base frame component (100); or
wherein the limiting portion comprises at least one protrusion, and the mating portion comprises a limiting groove, and when the hinge mechanism is in the unfolded state, limiting mating is enabled between the protrusion and the limiting groove to limit the floating plate (220) from tilting in a direction away from the base frame component (100).

7. The hinge mechanism according to claim 6, wherein the protrusion is fixed to the first connecting rod, and the floating plate (220) is provided with the limiting groove;
wherein the first connecting rod is provided with a mating notch, at least a part of the protrusion protrudes in the mating notch, and a part of the floating plate (220) is inserted into the mating notch to allow limiting mating between the limiting groove and the protrusion.

8. The hinge mechanism according to claim 7, wherein the at least one protrusion comprises two protrusions arranged at opposite sides of the mating notch and spaced apart from each other; and/or
wherein the floating plate (220) comprises a first support surface for forming the support structure and the mating portion arranged below the first support surface, and a part of the mating portion is inserted into the mating notch to allow limiting mating between the protrusions and the limiting groove.

9. The hinge mechanism according to claim 7 or 8, wherein a length direction of the limiting groove extends along a width direction of the floating plate (220), and the protrusion slides in the limiting groove during switching between the unfolded state and the folded state of the hinge mechanism;
wherein when the hinge mechanism is in the unfolded state, the protrusion bears against a side wall of the limiting groove to limit the floating plate (220) from tilting in a direction away from the base frame component (100).

10. The hinge mechanism according to any one of claims 7 to 9, wherein the second connecting rod component (400) comprises a movable member, the movable member is rotatably connected to the base frame component (100), and the movable member is slidably connected to the connection member (210);
wherein the mating portion is arranged on the floating plate (220), the first connecting rod component (300) comprises a second connecting rod and a transmission member,
wherein one end of the first connecting rod is rotatably connected to the connection member (210), and the other end of the first connecting rod is rotatably connected to one end of the second connecting rod and one end of the transmission member,
wherein the other end of the second connecting rod is rotatably connected to the base frame component (100), and the other end of the transmission member is rotatably connected to the movable member,
wherein the one end of the second connecting rod is provided with an avoidance notch for avoiding the mating portion, and the avoidance notch communicates with the mating notch to form an accommodating space for accommodating the mating portion.

11. The hinge mechanism according to any one of claims 2 to 10, wherein the second connecting rod component (400) comprises a movable member, the movable member is rotatably connected to the base frame component (100), and the movable member is slidably connected to the connection member (210);
wherein the first connecting rod component (300) comprises a second connecting rod and a transmission member;
wherein one end of the first connecting rod is rotatably connected to the connection member (210), and the other end of the first connecting rod is rotatably connected to one end of the second connecting rod and one end of the transmission member;
wherein the other end of the second connecting rod is rotatably connected to the base frame component (100), and the other end of the transmission member is rotatably connected to the movable member;
wherein one of the transmission member and the second connecting rod is provided with a pressing protrusion, and when the hinge mechanism is in the folded state, the connection member (210) and the base frame component (100) are arranged at an angle, and the pressing protrusion bears against the other one of the transmission member and the second connecting rod, so that the transmission member presses against the second connecting rod.

12. The hinge mechanism according to claim 11, wherein when the hinge mechanism is in the folded state, the pressing protrusion bears against the other one of the transmission member and the second connecting rod, so that a part of the second connecting rod is pushed up toward a center line direction of the base frame component (100); or
wherein the other end of the first connecting rod is rotatably connected to the connection member (210) and has a first rotation center, the other end of the transmission member is rotatably connected to the other end of the second connecting rod and has a second rotation center, and the one end of the transmission member is rotatably connected to the movable member and has a third rotation center;
wherein when the hinge mechanism is in the folded state, the first rotation center and the third rotation center form a first connection line, and the second rotation center is provided at an inner side of the first connection line, so that the pressing protrusion pushes up the second connecting rod.
